# EUROPEAN PATENT SPECIFICATION

(11) **EP 2 151 970 B1**
(45) Date of publication and mention of the grant of the patent: **03.08.2011**
(21) Application number: 08252659.1
(22) Date of filing: 09.08.2008
(51) Int. Cl.: H04L 29/08

(54) **Processing and supplying video data**
Verarbeitung und Bereitstellung von Videodaten
Traitement et fourniture de données vidéo

(43) Date of publication of application: 10.02.2010
(73) Proprietor: Saffron Digital Limited, London EC1N 8FH (GB)
(72) Inventor: Sedeffow, Peter Vassilev, Bethnal Green, London E2 9NL (GB)
(74) Representative: Atkinson, Ralph

(56) References cited:
- EP-A- 1 626 557
- EP-A- 1 786 205
- WO-A-00/79801
- US-A1- 2007 230 586
- SAMBE Y; WATANABE S; YU D; NAKAMURA T; WAKAMIYA N: "High-speed distributed video transcoding for multiple rates and formats" IEICE TRANSACTIONS ON INFORMATION AND SYSTEMS, [Online] vol. E88-D, no. 8, August 2005 (2005-08), pages 1923-1931, XP002516536 Retrieved from the Internet: URL:http://ietisy.oxfordjournals.org/cgi/r eprint/E88-D/8/1923> [retrieved on 2009-02-24]

## Description

The present invention relates to video processing apparatus of the type for supplying video data from a plurality of accessible sources to mobile devices. The present invention also relates to a method of the type for supplying video data from a plurality of accessible sources to mobile devices.

Techniques for downloading video material to mobile devices, such as mobile telephones, are known. Data of this type may be supplied to the mobile device as the material is viewed in a process generally referred to as streaming. Procedures for the optimisation of streaming techniques are described in the applicant's co-pending British patent application number 07 09 009.5 (US 12/112,238). As an alternative, it is also possible to download a complete file for subsequent viewing and procedures for optimising download processes are described in the applicant's co-pending British patent application number 07 09 030.1 (US 12/113,403).

Known techniques rely upon video assets being pre-processed so that they may be recalled from a dedicated server. The downloading of assets of this type usually requires commercial relationships to be established and the assets may be considered as having a relatively high value.

Recently, there has been a trend towards downloading video material from other sources, referred to herein as accessible sources where a payment for the material is not required and the material may be considered as having a relatively low value. An example of an accessible source of this type would be the highly popular "YouTube" website where it is possible for individuals to upload video material and for material of this type to be downloaded.

The downloading of material from accessible sources is primarily aimed at computer-based browsing equipment were appropriate coding and decoding (CODEC) software is available, allowing the material to be viewed on a computer style monitor. The present applicant has identified a desire for this material to be viewed on mobile devices but in doing so problems arise in that the nature of the material must be technically compatible with mobile distribution networks and the available features on the mobile device. Thus, using available techniques it is likely that a download of this type would take a considerable amount of time and a recipient would not be confident of the material being playable once received at the mobile device.

High-Speed Distributed Video Transcoding for Multiple Rates and Formats, Yasuo Sambe et al, IEICE Transactions on Information and Systems, Vol E88-D, No. 8*,* provides a method of transcoding data before sending it to requesting devices. In this method, a video file to be transcoded is split into small segments by a source PC. Each segment is sent to a networked transcoding PC, which transcodes the data. A merging PC then receives all the transcoded segments and stitches them together to create a transcoded copy of the entire video file. Data before and after each segment is also sent to each transcoding PC in order to allow it to decode the segment with respect to any reference frames that may be just before or just after the segment. This method requires a lot of processing to be done at the source PC before sending the segments out to the transcoding PCs. This processing takes time. A quicker, more efficient method of supplying the data to individual transcoding devices would be better.

According to an aspect of the present invention, there is provided a video processing apparatus of the aforesaid type, as set out in claim 1.

According to a second aspect of the present invention, there is provided a method of the aforesaid type, as set out in claim 7.

The invention will now be described by way of example only, with reference to the accompanying drawings, of which:
Figure 1 shows an environment that includes a video processing station;
Figure 2 shows procedures performed within the environment identified in Figure 1;
Figure 3 details the video processing station identified in Figure 1;
Figure 4 details the transcoding system identified in Figure 2;
Figure 5 identifies procedures performed by the control processor identified in Figure 4;
Figure 6 shows a mobile device of the type identified in Figure 1;
Figure 7 shows the mobile device of Figure 6 displaying a list;
Figure 8 shows procedures for sending a video asset;
Figure 9 shows procedures performed at each transcoding processor;
Figure 10 illustrates the transcoding process;
Figure 11 shows a sequence of transcoded frames; and

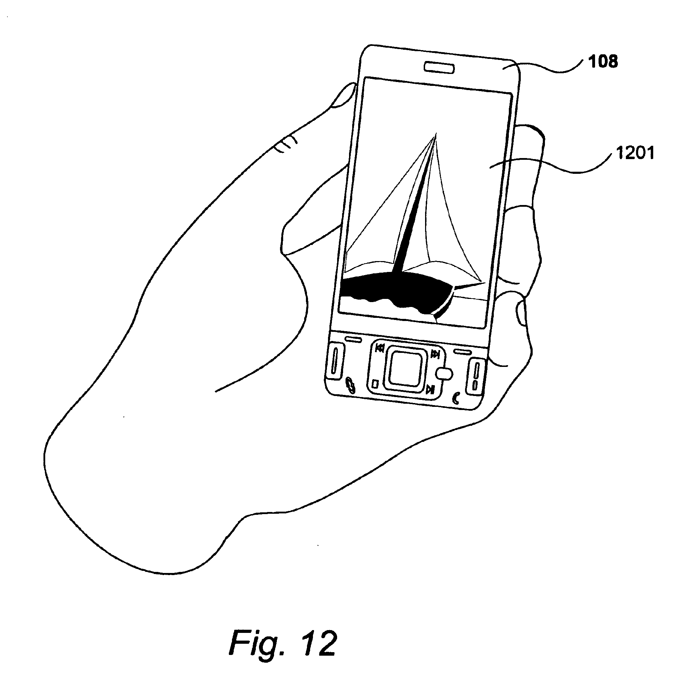

Figure 12 shows the display of video content at a mobile device.

### Figure 1

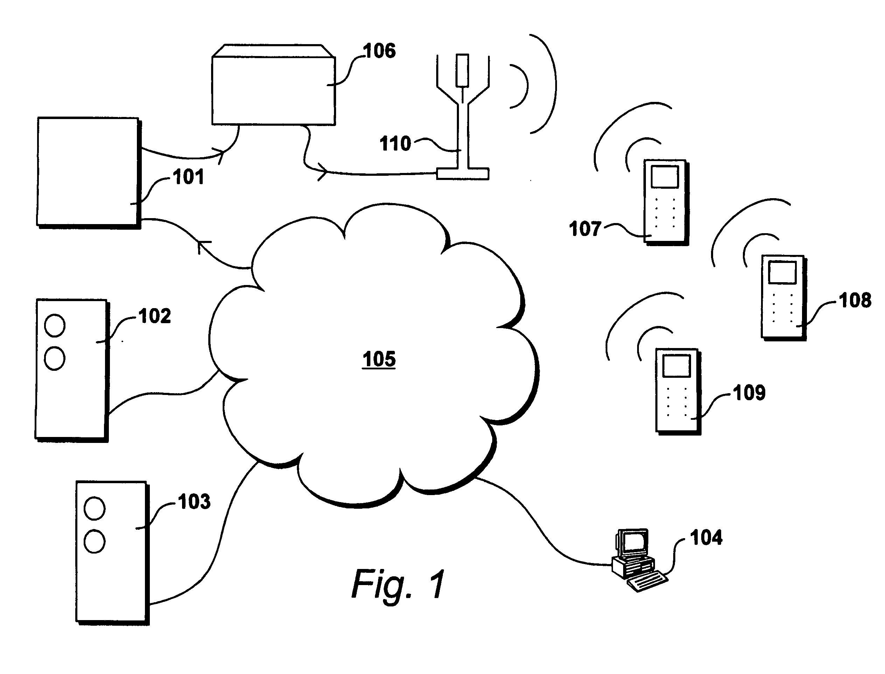

An environment that includes video processing station 101 is illustrated in Figure 1. The video processing station 101 supplies video data from many accessible sources, including source 102 and source 103. These sources are accessible to anyone without payment being made but as such the supplier is not motivated to configure the downloadable or streamable material for particular mobile devices. Thus, it is intended that the accessible sources are accessible via a conventional web browsing system, such as system 104 illustrated in Figure 1.

The video processing station 101 receives video assets from the accessible sources 102, 103 via the Internet 105. In addition, the video processing apparatus 101 is also connected to a mobile telephony service provider 106, that communicates with mobile devices 107, 108 and 109 via a network of transmitter base stations, such as transmitter 110.

### Figure 2

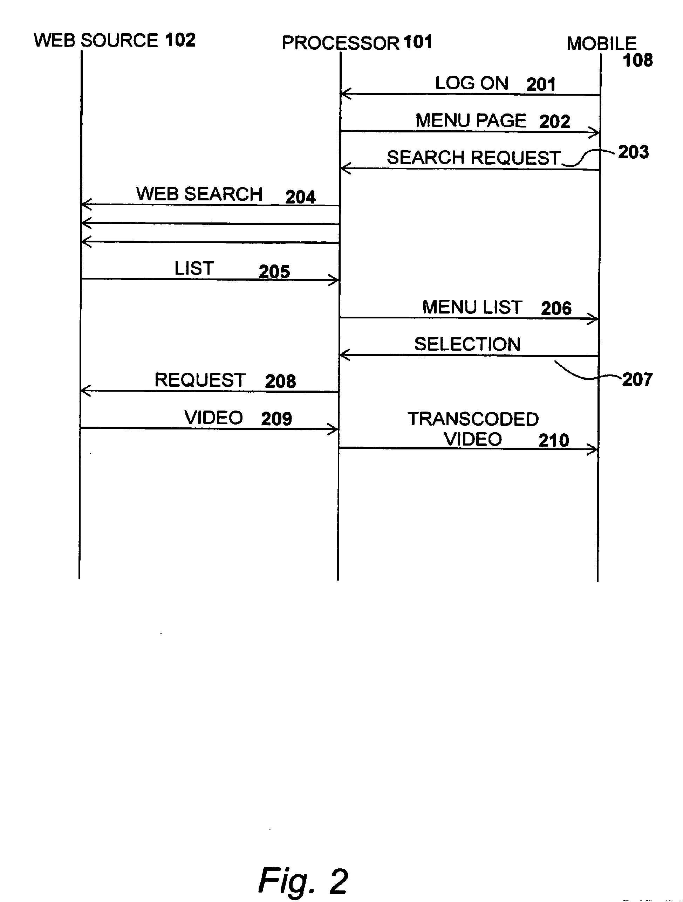

Procedures performed within the environment shown in Figure 1 are illustrated in Figure 2, in the form of a protocol diagram. For the purposes of illustration, it is assumed that a user of mobile device 108 wishes to receive a video asset from an accessible source 102. This video asset may take the form of a home video that does not include any copyright restrictions. The video asset is held in a form suitable for being streamed or downloaded to a conventional browser 104. Thus, in order for this asset to be viewed at mobile device 108, it is necessary for the asset to be transcoded into a form that is compatible with the mobile device 108 and the transmission characteristics of the cellular network.

The process is initiated by a mobile device 108 making a log-on request 201. This results in a menu page 202 being returned from the processor 101 to the mobile device 108.

In response to receiving a menu page, the mobile device initiates a search request 203 based on various catch words in a manner substantially similar to that used by Google for example.

At the video processing station 101, a web search is initiated resulting in the video processing station 101 making a plurality of requests for information from accessible sources, such as sources 102 and 103, as illustrated by communication line 204.

Lists of information 205 are returned back to the processing station 101 which then conveys a menu list 206 to the mobile device 108.

At the mobile device 108, a selection is made resulting in the selection information 207 being returned to station 101. The processing station 101 makes a request 208 to the web source 102 resulting in the video asset being returned to station 101 as shown at 209. This communication from the web source 102 to the processing station 101 takes place using conventional protocols, such that the video asset is supplied to the processing station 101 in a manner substantially similar to a supply of material to a conventional browser 104.

At the processing station 101 real-time transcoding processes are performed, taking account of the nature of the mobile equipment 108 and the cellular transmission network 106, 110. Thus, for example, the video processing station 101 will be aware of the nature of the mobile device 108. This is achieved by receiving an identification of the device 108 when the initial log-on procedure 201 is effected. Thus, in response to receiving this information, the video processing station 101 is aware of the capabilities of the mobile device 108 and will therefore transcode to an appropriate definition, thereby making full use of the display capabilities and using a preferred CODEC available at the mobile device.

In addition, by taking account of the mobile telephony transmission characteristics, a decision may be made as to whether it is possible to stream the video for immediate viewing or whether it would only be appropriate to download the video material for subsequent viewing. Thus, if bandwidth restrictions exist, it would not be possible to stream the material.

The preferred embodiment has developed many new techniques but a major problem exists in terms of transcoding assets at video processing station 101. Thus, the present applicant is of the view that the transcoding process should take place in less than ten seconds, so the proposal for decoding and then recoding video frames within this interval creates a substantial hurdle.

### Figure 3

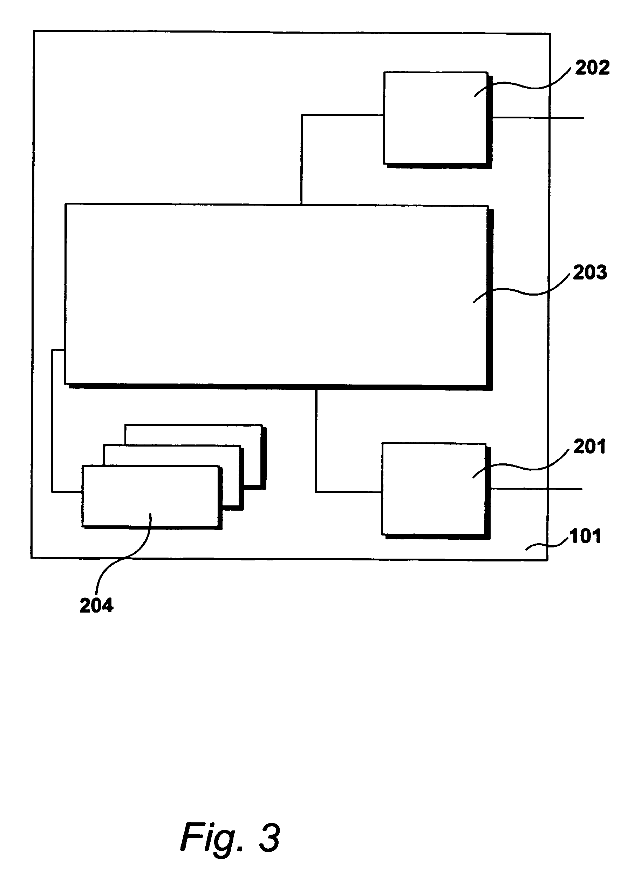

Video processing station 101 is detailed in Figure 3. The video processing station 101 includes an Internet-connected input device 201 for receiving video assets from Internet accessible servers (102, 103). In addition, the video processing station is provided with a mobile network-connected output device 202 for sending transcoded copies of video assets to mobile devices (107 to 109). The transcoding station also includes a transcoding system 203 configured to transcode video assets in real-time. Thus, a video asset is received at input device 201, transcoded within transcoding system 203 and then conveyed to output device 202 for transmission to the requesting mobile device.

Having transcoded a video asset, the transcoded version is written to a solid state cache 204, preferably having a storage capacity of several terabytes. Thus, having transcoded an asset it is not necessary for the transcoding operation to be performed again while the transcoded copy remains in cache 204.

The present applicant has identified the advantages of including cache 204. Although a vast number of video assets are available from accessible sources, it is likely that during any period of time the number of assets actually being downloaded represents a relatively small sub-set of the total available number. The actual nature of this sub-set will vary over time as particular video assets become very popular for a short period of time, possibly due to an advertising campaign or by viral marketing etc and word of mouth. Furthermore, the number of video assets that are viewed on mobile devices again tends to be a smaller sub-set of the total number of assets downloaded by computer systems. Thus, over a period of time, popular downloads will be written to cache 204 and many requests for material can be satisfied by reading the processed material from cache 204 without being required to perform real-time transcoding. It is also appreciated that several transcoded copies of the video asset may exist in cache 204, representing examples of the different coding possibilities.

### Figure 4

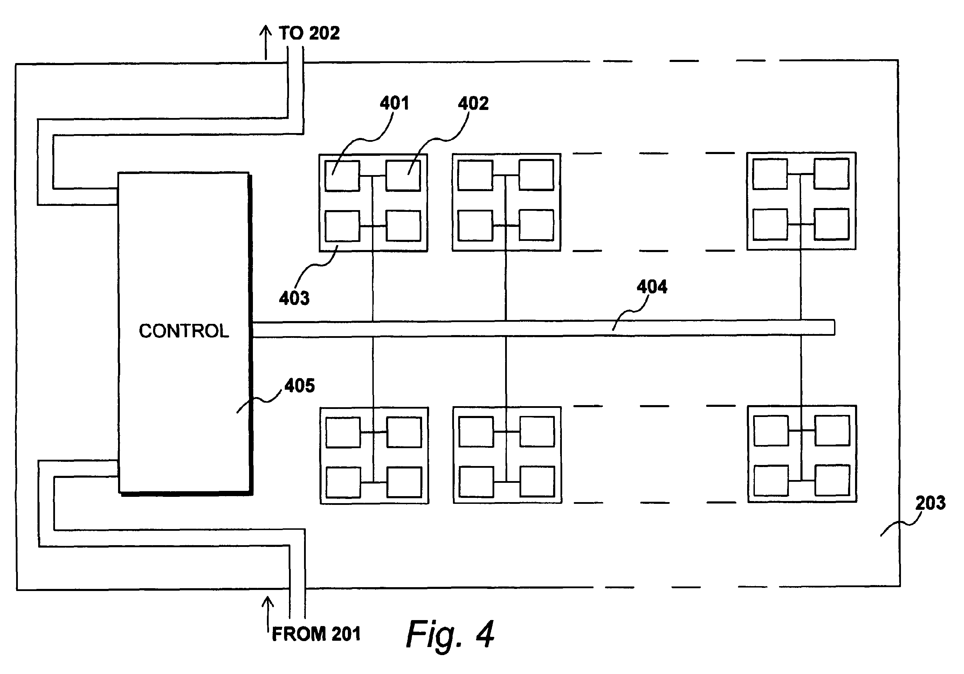

Transcoding system 203 is detailed in Figure 4. The transcoding system 203 has a large number of individual transcoding processors 401, 402 etc. Each transcoding processor 401 is implemented as a processor core and in this example a total of four cores are available within each chip 403. A plurality of chips with associated circuitry are enclosed within an individual rack mounted server and within the transcoding system 203 a large number of interconnected servers are provided. Thus, many individual processors are connected to a high bandwidth bus 404 or similar communication network.

In a preferred embodiment, a total of one hundred and sixty individual transcoding processors are included within the transcoding system 203, thereby providing sufficient processing power for a video asset lasting tens of minutes when displayed in real-time to be transcoded within four seconds. However, it can be appreciated that the number of processors provided within any system will be dependent upon the processing power of each individual processor and the level of processing required for each individual segment.

It is also appreciated that the segmentation of the video asset is undesirable given that artefacts may occur when the video segments are recombined. Consequently, for relatively short video clips, it is preferable for a sub-set of the available processors to be instructed so as to reduce the level of segmentation to a minimum while still performing a transcoding process over a period of a few seconds.

The transcoding system 203 includes a control processor 405 that receives input data from input device 201 and supplies transcoded data to output device 202. Having received a video asset, the control processor 405 supples a copy of the total video asset to each of the transcoding processors 401, 402 etc. Thus, in a preferred embodiment, the control processor 405 broadcasts the video asset over bus 404 resulting in a copy of the asset being retained at each individual processor 401 to 402. In this way, it is not necessary for the control processor 405 to implement a procedure for subdividing the video asset, which would in itself place a significant burden upon the control processor 405.

Furthermore, it has been appreciated that some file formats require the entire file to be considered before it is possible to identify individual frames therein. It is also appreciated that encoding techniques of this type will tend to become more sophisticated, given on-going requirements to effect greater levels of compression upon large video assets. Thus, each individual transcoding processor 401, 402 is placed in a position where it is possible for the processor to read and process the whole of the video material.

To perform the transcoding operation at high speed, each transcoding processor 401, 402 etc is instructed by the control processor 405 to transcode a time-based segment of the asset to produce transcoded segments. Thus, control processior 405 is required to identify the total duration of the video asset and then divide this total duration by the total number of transcoding processors available (such as one hundred and sixty). Thus, for video assets having a duration that is greater than a predetermined duration, all of the available (one hundred and sixty) transcoding processors are deployed. As previously stated, however, for small clips fewer transcoding processors may be selected.

Thus, having identified the total number of transcoding processors available and the total duration of the video asset, the total duration is divided by the number of processors available so as to identify specific durations for each processor 401, 402 to process.

For the purposes of illustration, a video asset may have been identified as having a total duration of one hour, forty-six minutes and forty seconds. This is equivalent to a duration of six thousand, four hundred seconds which when divided across one hundred and sixty processors results in forty second segments being derived from each of said processors. Thus, following this example, transcoding processor 401 would be required to process a segment of video material from duration 00:00:00 to 00:00:40. Processor 402 would be instructed to transcode the next segment and would therefore receive instructions to transcode from position 00:00:40 to 00:01:20. Thus, each individual transcoding processor within the transcoding system 203 would be allocated its unique forty second segment, such that the transcoding procedures are completed in parallel and then reassembled at the control processor 405, for transmission to the output device 202.

### Figure 5

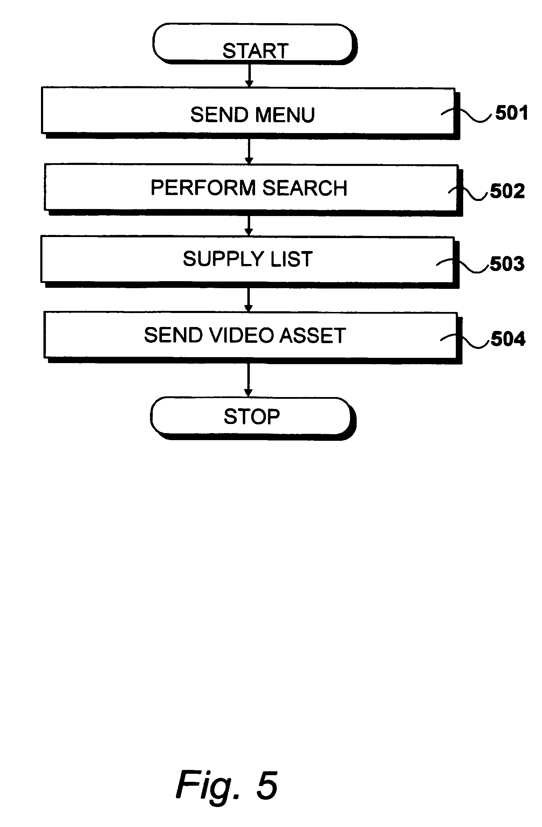

Procedures performed by control processor 405 are identified in Figure 5. At step 501 the processor sends a menu to the requesting mobile device 108. In response to commands received from the mobile device 108, the processor performs a search at step 502.

Having received the results of the search, a list of the identified assets is returned to the requesting mobile device 108 at step 503. The user of mobile device 108 identifies a particular asset from the list and identifies this to the control processor. The control processor receives the original video information, organises the transcoding process (by supplying a copy of the video asset to each of the transcoding processors 401, 402) and sends the transcoded video asset to the requesting mobile device 108, as identified at step 504.

### Figure 6

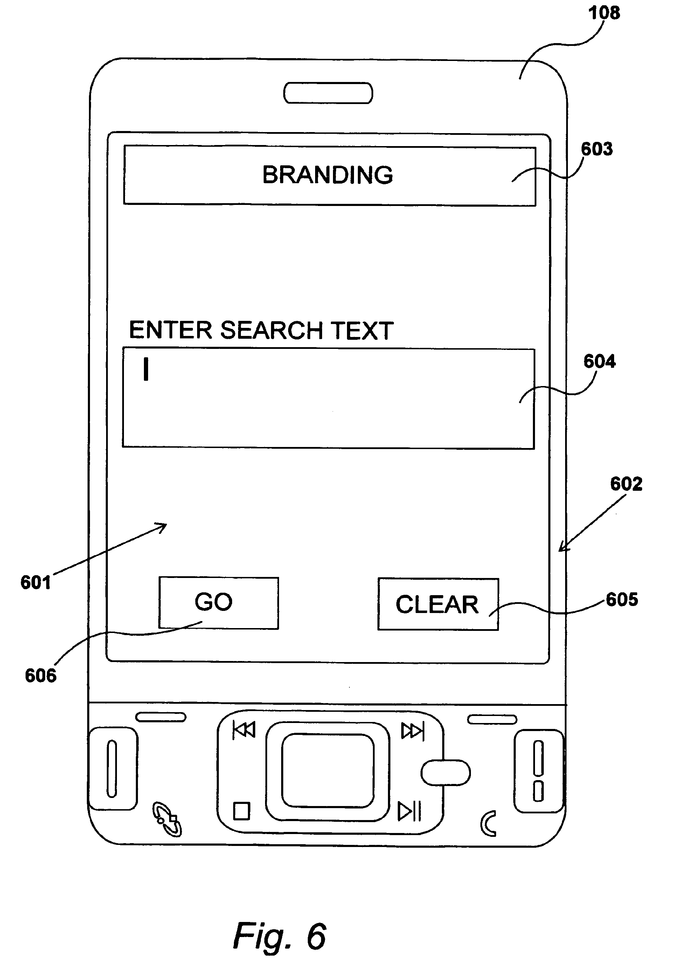

Mobile device 108, suitable for displaying video material, is illustrated in Figure 6. In response to the menu data being sent at step 501, a menu 601 is displayed on the screen 602 of the mobile device 103.

In this example, the menu includes a region 603 for branding to be included, either that of the mobile telephony network or of a specific service provider, for example.

A text box 604 is provided for the reception of textural information generated by a user. Thus, text of this type may be generated by depressing manual buttons, pressing buttons identified as keys on a touch sensitive screen or by invoking handwriting recognition on a touch sensitive screen. Thus, by either of these methods, text is received within text box 604. If a user decides not to go ahead with the process or wishes to re-enter new data it is possible for the text box 604 to be cleared on the operation of a button 605, either in the form of a touch sensitive key or as a legend identifying the functionality of a physical key.

When a user has entered text which in some way identifies video assets of interest, the user activates "go" button 606, resulting in the textural information being returned to control processor 405.

### Figure 7

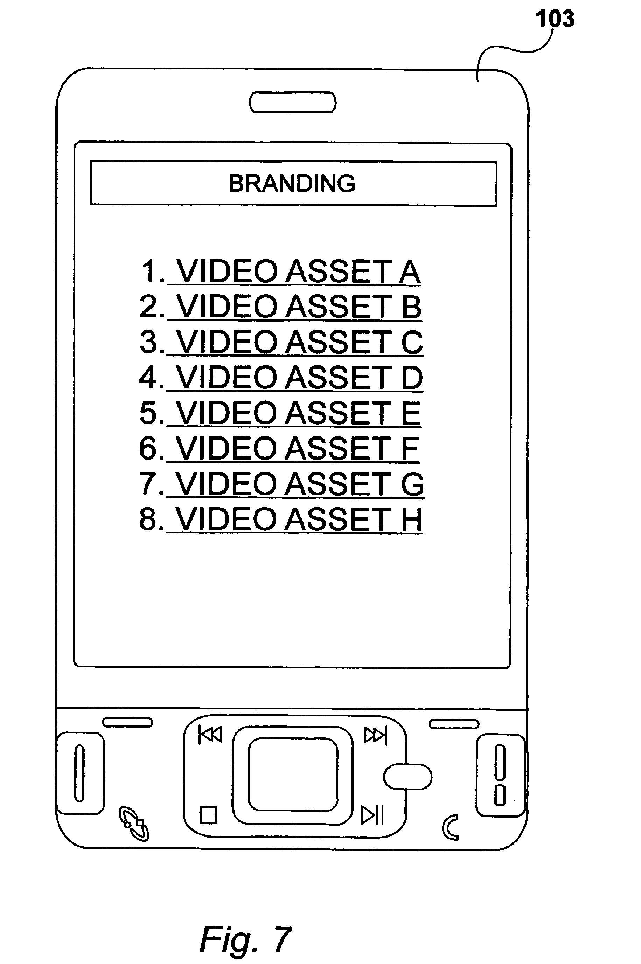

After receiving text, the search is performed at step 502 resulting in a list being returned to the user at step 503. An example of such a list, as displayed on the mobile device 108, is illustrated in Figure 7. In this example, eight video assets have been identified with a first being shown as "video asset A", a second being shown as "video asset B" and so on until an eighth is illustrated as "video asset H".

Each of the video assets is shown underlined, thereby representing a link. Thus, upon selecting one of these links, an identification of the video asset is returned to the control processor 405 which will then instigate the process of retrieving the video asset from its server 102, transcoding the video asset at the processing station 101 and sending the transcoded video asset to the requesting mobile device 108 via the mobile network 106, 110.

### Figure 8

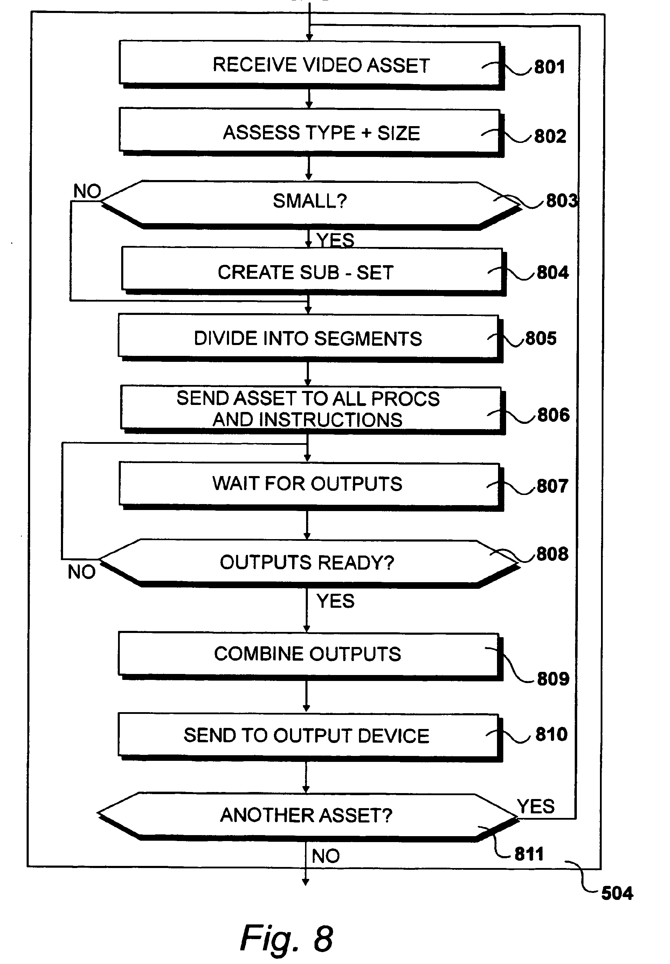

Procedures for sending the video asset, as identified at step 504, are detailed in Figure 8.

At step 801 the video asset is received from input device 201 such that at step 802 it is possible for the control processor 405 to identify the asset type and its duration. It is necessary to identify the type of the asset such that appropriate decoding may be performed. Thus, this assessment results in the selection of particular CODEC instructions, which are subsequently loaded by each of the transcoding processors 401, 402 etc. Similarly, the size of the asset is determined so that the asset may be divided into segments (one hundred and sixty segments in a preferred embodiment) for subsequently instructing the transcoding processors.

At step 803 a question is asked as to whether the duration of the asset is relatively small and if this question is answered in the affirmative, a sub-set of processors is idenitfied at step 804. Thus, one hundred and sixty transcoding processors may be available but for small assets it may be preferable to use, say, twenty of these processors. As a result of this, it will take longer to transcode the clip but given the relatively short length of the clip, this will not introduce significant delay. However, by reducing the total number of segments, the overall quality of the resulting transcoded asset will be improved. If the video asset is relatively large, the question asked at step 803 is answered in the negative and the asset is divided such that all of the available transcoding processors are deployed.

At step 805 the duration of the asset (not the asset itself) is divided to identify specific segments.

For the purposes of illustration, it is assumed that a video asset has been selected which has a total duration of one hour, forty-six minutes and forty seconds. The asset therefore has a total duration of six thousand four hundred seconds such that when divided between the one hundred and sixty available transcoding processors, each individual processor will be instructed to transcode a segment having a duration of forty seconds. Thus, the first forty second segment could be allocated to processor 401. Processor 401 would therefore be instructed to transcode a segment starting at 00:00:00 to 00:00:40. Similarly, the next segment would be handled by processor 402 so it would be instructed (by the control processor 405) to transcode the video material from position 00:00:40 to position 00:01:20.

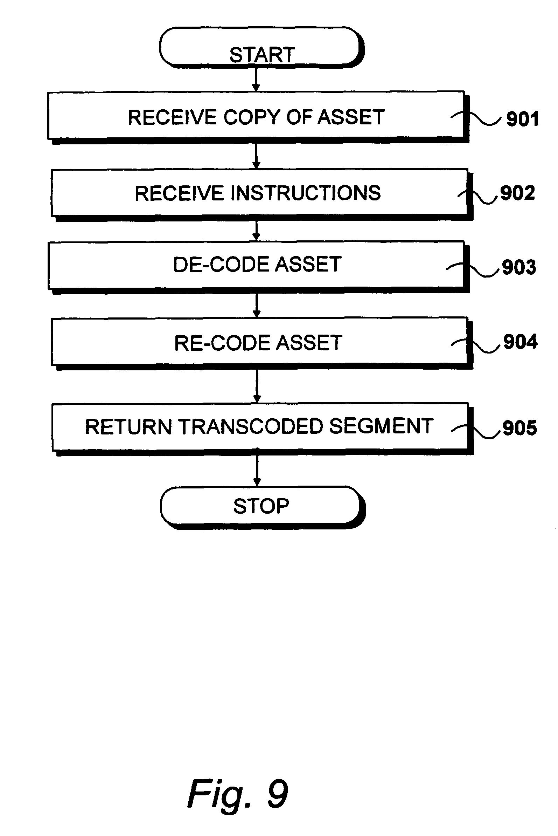

At step 806 the whole of the video asset is sent to all of the transcoding processors 401, 402 etc. Thus, although each processor is only required to transcode a relatively small segment of the total material, each processor is provided with the whole of the material and then it is for each processor to select material to be transcoded in response to instructions received from the control processor 405. Thus, each processor receives the totality of the video asset plus a specific instruction identifying the segment of the asset to be transcoded. With this information, the transcoding process is performed, as described with reference to Figure 9.

At the control processor 405, step 807 performs a short wait while the material is being prepared in parallel by the transcoding processors. Thus, at step 808 a question is asked as to whether the outputs are ready and if not, further waiting occurs at step 807.

Eventually, outputs will be available from all of the transcoding processors resulting in the question asked at step 808 being answered in the affirmative. Thereafter, the outputs from the transcoding processors are combined at step 809 and the resulting transcoded asset is sent to output device 202 at step 810.

At the control processor 405, a question is asked as to whether another asset is to be processed and if answered in the affirmative control is returned to step 801. Alternatively, with no further assets to be processed the question asked at step 811 will be answered in the negative.

### Figure 9

Procedures performed at each of the transcoding processors 401, 402 etc are identified in Figure 9. At step 901 a copy of the video asset is received in its totality and stored temporarily in volatile storage. Thus, as previously described, each individual transcoding processor retains a copy of the entire video asset.

At step 902 specific instructions are received by each individual transcoding processor identifying the segment of video material to be transcoded.

At step 903 a decoding operation is performed in order to reconstitute original video frames within the instructed segment. Thus, following the previously described example, a sufficient number of frames within the original encoded video data are decoded in order to generate forty seconds of video data.

At step 904 the (forty seconds of) decoded video data is re-coded so as to be compatible with the requirements of the mobile environment.

Thereafter, at step 905 the transcoded segment is returned to the controll processor 405.

### Figure 10

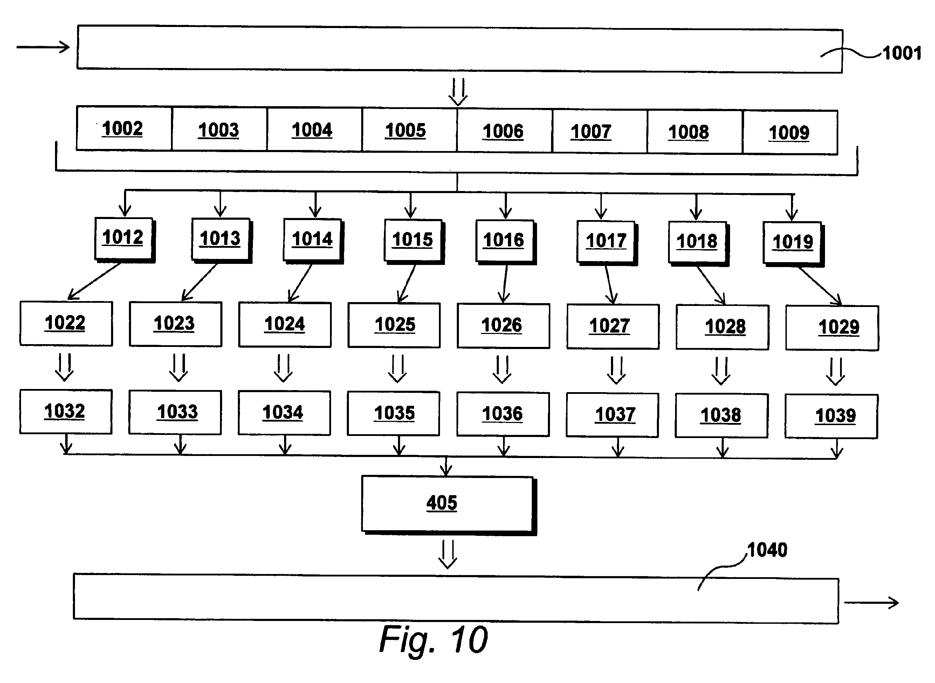

The transcoding process performed within the transcoding system 203 is illustrated in Figure 10. As previously described, the process is initiated by the reception of video footage 1001 that has usually been compressed using compression techniques such as MPEG. Many specific compression procedures are available, each having their own dedicated CODEC for performing the coding and decoding operations. However, the majority of these compression procedures use similar techniques for achieving video compression.

Firstly, it is possible to compress each individual video frame using discreet cosine transforms or something similar. This results in the generation of coefficients which may or may not be truncated to achieve a level of compression dependent upon the nature of the original material and dependent upon the degree of loss that may be tolerated.

In addition, further compression is achieved by comparing adjacent video frames such that the differences between frames are recorded instead of the entire frame. This type of compression works well with video given that the differences between most adjacent frames are relatively small, unless a change of scene has occurred.

The control processor is required to identify the type of compression that has occurred so as to determine the type of CODEC required in order to perform a decoding operation and also to determine the duration of the asset.

Having identified the duration of the asset, the original material 101 is divided into a plurality of segments shown as 1002 to 1009 in Figure 10. Thus, in this example, for the purposes of illustration, the original material 1001 has been divided into a total of eight time-based segments of equal duration. As previously described, a preferred embodiment may divide the total asset into a total of one hundred and sixty segments.

For the purposes of the example, eight individual transcoding processors 1012 to 1019 are provided. As previously stated, the control processor does not divide the unprocessed material and supply appropriately sized portions to each of the transcoding processors. In a preferred embodiment, the control processor 405 broadcasts the totality of the incoming video to all of the transcoding processors 1012 to 1019. Thus, each transcoding processor 1012 to 1019 preferably retains a copy of the entire source material for subsequent decoding. The control processor 405 instructs each individual transcoding processor to identify the specific segment of video for which a transcoding operation is required.

The process is initiated by firstly performing a decoding process such that each transcoding processor 1012 to 1019 produces a respective decoded segment of video material 1022 to 1029. Thus, assuming each transcoding processor is required to produce forty seconds of transcoded material, for the purposes of this illustration, it may be assumed that transcoding processor 1013 is required to transcode forty seconds of output material, from position 00:00:40 to 00:01:20.

Having decoded the material to produce segments 1022 to 1029, a recoding operation is performed, so as to convert the material into a form suitable for reception at the mobile device. Thus, from decoded video segments 1022 to 1029, recoded segments 1032 to 1039 are produced.

Recoded segments 1032 to 1039 are received at the control processor 405 which in turn reassembles the segments to produce output video data 1040.

It is also appreciated that the majority of video assets will also include audio tracks and although audio data does not naturally present itself as discreet frames, a digital representation of the audio material will be represented by discreet samples and these samples may in turn be associated with time code defining the position of frames within the video material. Thus, while it would be possible to provide additional processing capabilities for the processing of audio material, in a preferred embodiment the audio samples are retained with the video material and processed within the same transcoding processor. Thus, the segmentation that divides the video material between the individual transcoding processors is redeployed for the transcoding of the audio material, such that, at each stage, the audio material is being processed with its associated video material.

### Figure 11

In a preferred embodiment, each transcoding processor identifies an instructed segment of the video asset and decodes data from that time segment. However, in addition, under many circumstances the transcoding processor will decode some frames before the defined segment and/or after the defined segment to facilitate to video decoding process.

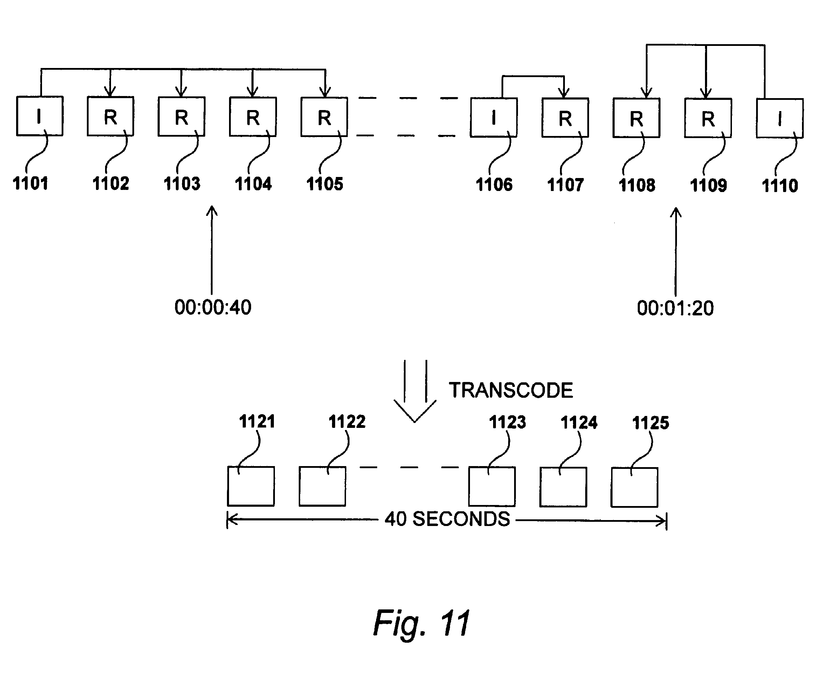

In Figure 11, a sequence of video frames are shown, representing frames within a segment. Frames 1101 to 1105 represent frames at the start of a segment and frames 1106 to 1111 represent frames at the end of the segment, a plurality of frames within the centre of the segment are not shown. The frames shown in Figure 11 are required in order to transcode material lying within the segment defined as 00:00:40 to 00:01:20. Thus, this reprents a forty second segment. The position of the start of the segment is shown, lying between frames 1103 and 1104. Similarly, the end point is shown, lying between frames 1108 and 1109. The transcoded material from the segment will include frames 1121 and 1122 at the start, along with frames 1123, 1124 and 1125 at the end. In the final output material, frame 1121 will follow the final frame of the previous segment and frame 1125 will precede the first frame of the next segment.

As previously described, many compression algorithms make use of spatial compression, reducing the amount of data to convey an individual frame without making reference to any other frames. Frames of this type are often identified as "I frames", possibly because they may be viewed as individual frames without making reference to other frames in a temporal manner. Frames of this type are also often substantially similar to individual graphical frames produced as still images. Thus, within an MPEG stream, the I frames may be considered as being substantially similar to JPEG images.

In addition to the spatially compressed I frames, the video stream also includes relative frames, identified as "R frames" in the embodiment shown in Figure 11. These relative frames have undergone spatial compression similar to I frames but further compression is achieved by storing only the differences between the frame under consideration and one or more other frames within the sequence. R frames may also occur in different types. Thus, under some coding schemes, some of the R frames are identified as "P frames" in which the temporal comparisons are made with respect to previously transmitted frames in the sequence. In addition, some coding techniques deploy "B frames" where greater compression is achieved by transmitting difference signals based on later frames in the sequence. Thus, when decoding as part of a streaming operation, it is only possible to decode these B frames after a later transmitted frame has been received. It can therefore be appreciated that a level of buffering is required as part of the CODEC procedures.

As illustrated in Figure 11, the segment starts at 00:00:40 therefore the first frame of interest should be 1104. However, this is an R frame and has therefore undergone temporal compression. The data contained within R frame 1104 merely represents differences between it and previous frame 1103. Similarly, frame 1103 only represents differences from frame 1102 which again is an R frame representing differences from frame 1101. In this example, frame 1101 is an I frame. Consequently, if frame 1104 is to be reconstituted, it is necessary to process frames 1101, 1102 and 1103. As a result, in order to perform the transcoding operation, frames 1101 to 1103 are read in addition to frames 1104 onwards.

At the end of the segment, the last frame to be considered should be 1108. However, this frame has been derived in a backwards fashion from I frame 1110 and relative frame 1109. Thus, in order to reconstitute frame 1108, it is necessary to consider frame 1109 and frame 1110. Consequently, an advantage of each transcoding processor receiving the totality of the video material is that the control processor does not need to make any decisions as to where to segment the original source material. The control processor does divide the total duration by the total number of processors available, as illustrated in Figure 11. However it is not then possible to divide the input material at these frame boundaries. In particular, input frame 1101 is required as source material for two output segments, as is input frame 1110.

### Figure 12

The present invention provides for the supplying of video data from accessible sources to mobile devices, such as device 108. An identification of a video asset is received as described with reference to Figure 7. The video asset is read from an external source and a copy of the asset is supplied to many transcoding processors, as illustrated in Figure 4. Each of the processors is instructed to transcode a time-based segment of the asset such that (in a preferred embodiment) one hundred and sixty time-based segments of the video asset are transcoded in parallel. Thus, given this level of processing capability, the standard video assets from high bandwidth sources may be transcoded in seconds and streamed or downloaded to mobile device 108. Thus, the transcoded segments are combined and the complete transcoded video asset is supplied to the mobile device, thereby allowing the video material 1201 to be displayed at the mobile device as if it was being downloaded from a mobile device specific server.

## Claims

1. Video processing apparatus (101) for supplying video data from a plurality of accessible sources (102, 103) to mobile devices (102, 103), comprising:
an internet connected input device (201) for receiving video assets from internet accessible servers;
a mobile network connected output device (202) for sending transcoded copies of said video assets to mobile devices; and
a transcoding device (203) having a plurality of transcoding processors (401, 402), wherein:
said transcoding device is configured to:
supply data representing a video asset to each of said transcoding processors;
instruct each said transcoding processor to transcode a time based segment of said video asset to produce transcoded segments; and
combine said transcoded segments to produce a transcoded copy;
said data representing a video asset supplied to each transcoding processor is a copy of the whole of said video asset.

2. Video processing apparatus according to claim 1, **characterised by** each transcoding device having access to a plurality of video coding and decoding procedures.

3. Video processing apparatus according to claim 1 or claim 2, **characterised in that** each transcoding processor identifies the instructed time-based segment and reads some frames before and/or after said defined segment so as to effect complete decoding.

4. Video processing apparatus according to any of claims 1 to 3, **characterised in that** the transcoding device makes use of all available trancoding processors if the video data has a duration that is greater than a predetermined minimum duration or else the transcoding device makes use of a reduced sub-set of transcoding processors.

5. Video processing apparatus according to any of claims 1 to 4, **characterised in that** the transcoding device includes a cache for caching previously decoded video assets.

6. Video processing apparatus according to any of claims 1 to 5, **characterised by** said transcoding device instructing each of the transcoding processors to transcode time-based segments of audio data associated with each time-based segment of video data.

7. A method of supplying video data from a plurality of accessible sources (102, 103) to mobile devices (102, 103), comprising the steps of:
receiving an identification of a video asset from a requesting mobile device;
reading said video asset from an external source:
supplying data representing the video asset to each of a plurality of transcoding processors;
instructing each said processor to transcode a time-based segment of the asset;
combining transcoded segments to produce a transcoded copy; and
supplying said transcoded copy to the requesting mobile device;
**characterised in that**:
said data representing the video asset supplied to each transcoding processor is a copy of the whole of said video asset.

8. The method according to claim 7, **characterised in that** said accessible sources are provided by web sites accessible via the internet.

9. The method according to claim 7 or claim 8, **characterised in that**:
a search is performed to identify video assets;
a list is presented to a user at a mobile device; and
an identification is received in response to a user making a selection from said list.

10. The method of supplying video data according to any of claims 7 to 9, **characterised in that** each transcoding processor has access to a plurality of coding and decoding procedures.

11. The method of supplying video data according to any of claims 7 to 10, wherein each processor identifies an instructed segment of the video asset and decodes some frames before and/or after said defined segment to facilitate video decoding.

12. The method of supplying video data according to any of claims 7 to 11, **characterised in that** all available processors are instructed if the duration of the asset is greater than a predetermined minimum duration or else a reduced sub-set of processors are instructed.

13. The method of supplying video data according to any of claims 7 to 12, wherein previously decoded material is cached.

14. The method of supplying video data according to claims 13, wherein said previously decoded material is cached in solid state memory to facilitate fast access to said cached material.

15. The method of supplying video data according to any of claims 7 to 14, **characterised in that** time-based segments of audio material are processed in combination with their respective video material.

## Patentansprüche

1. Ein Videobearbeitungsgerät (101) zur Übertragung von Videodaten von einer Pluralität zugänglicher Quellen (102, 103) an mobile Geräte (102, 103), welches die folgenden Bestandteile beinhaltet:
ein mit dem Internet verbundenes Eingabegerät (201) zum Empfang von Videoinhalten von über das Internet erreichbaren Servern;
ein mit einem mobilen Netzwerk verbundenes Ausgabegerät (202) zum Übertragen transcodierter Kopien der besagten Videoinhalte an mobile Geräte; und
eine Transcodiervorrichtung (203) mit einer Pluralität von Transcodierprozessoren (401, 402), **dadurch gekennzeichnet, dass**:
die besagte Transcodiervorrichtung konfiguriert ist, um:
Daten, die einen Videoinhalt darstellen, an jeden der besagten Transcodierprozessoren zu übertragen;
jeden der besagten Transcodierprozessoren zu instruieren, ein zeitbasiertes Segment des besagten Videoinhalts zu transcodieren; und
die besagten transcodierten Segmente zu kombinieren, um eine transcodierte Kopie des gesamten besagten Videoinhalts zu produzieren; **dadurch gekennzeichnet, dass**:
die den besagten den Videoinhalt darstellenden Daten, die an jeden Transcodierprozessor übertragen werden, eine Kopie der gesamten besagten Videodaten darstellen.

2. Videobearbeitungsgerät gemäß Anspruch 1, **dadurch gekennzeichnet, dass** jede Transcodiervorrichtung Zugang zu einer Pluralität von Videocodier- und -decodierverfahren aufweist.

3. Videobearbeitungsgerät gemäß Anspruch 1 oder Anspruch 2, **dadurch gekennzeichnet, dass** jeder Transcodierprozessor das instruierte zeitbasierte Segment identifiziert und einige Frames vor und/oder nach dem besagten definierten Segment liest, um eine vollständige Decodierung auszuführen.

4. Videobearbeitungsgerät gemäß einem der Ansprüche 1 bis 3, **dadurch gekennzeichnet, dass** die Transcodiervorrichtung alle verfügbaren Transcodierprozessoren nutzt, wenn die Videodaten eine Dauer aufweisen, die größer ist als eine vorherbestimmte Mindestdauer, und dass die Transcodiervorrichtung anderenfalls eine reduzierte Teilmenge von Transcodierprozessoren verwendet.

5. Videobearbeitungsgerät gemäß einem der Ansprüche 1 bis 4, **dadurch gekennzeichnet, dass** die Transcodiervorrichtung einen Cachespeicher zum Zwischenspeichern zuvor decodierter Videoinhalte aufweist.

6. Videobearbeitungsgerät gemäß einem der Ansprüche 1 bis 5, **dadurch gekennzeichnet, dass** die besagte Transcodiervorrichtung jeden der Transcodierprozessoren instruiert, zeitbasierte Segmente von Audiodaten zu transcodieren, die mit jedem zeitbasierten Segment von Videodaten verbunden sind.

7. Eine Methode zum Übertragen von Videodaten von einer Pluralität zugänglicher Quellen (102, 103) an mobile Geräte (102. 103), die die folgenden Schritte umfasst:
Empfangen einer Identifikation eines Videoinhalts von einem anfordernden mobilen Gerät;
Lesen des besagten Videoinhalts von einer externen Quelle;
Übertragen der den Videoinhalt darstellenden Daten an eine Pluralität von Transcodierprozessoren;
Instruieren jedes der besagten Prozessoren, ein zeitbasiertes Segment des Inhalts zu transcodieren;
Kombinieren transcodierter Segmente, um eine transcodierte Kopie zu produzieren; und
Übertragen der besagten transcodierten Kopie an das anfordernde mobile Gerät, **dadurch gekennzeichnet, dass**:
die den besagten den Videoinhalt darstellenden Daten, die an jeden Transcodierprozessor übertragen werden, eine Kopie der gesamten besagten Videodaten darstellen.

8. Die Methode gemäß Anspruch 7, **dadurch gekennzeichnet, dass** die besagten zugänglichen Quellen durch über das Internet verfügbare Websites zur Verfügung gestellt werden.

9. Die Methode gemäß Anspruch 7 oder Anspruch 8, **dadurch gekennzeichnet, dass**:
eine Suche durchgeführt wird, um Videoinhalte zu identifizieren;
einem Benutzer an einem mobilen Gerät eine Liste präsentiert wird; und
eine Identifikation empfangen wird, wenn ein Benutzer eine Auswahl von der besagten Liste trifft.

10. Die Methode zum Übertragen von Videodaten gemäß einem der Ansprüche 7 bis 9, **dadurch gekennzeichnet, dass** jeder Transcodierprozessor Zugang zu einer Pluralität von Codier- und Decodierverfahren hat.

11. Die Methode zum Übertragen von Videodaten gemäß einem der Ansprüche 7 bis 10, **dadurch gekennzeichnet, dass** jeder Prozessor ein instruiertes Segment des Videoinhalts identifiziert und einige Frames vor und/oder nach dem besagten definierten Segment decodiert, um die Videodecodierung zu ermöglichen.

12. Die Methode des Übertragens von Videodaten gemäß einem der Ansprüche 7 bis 11, **dadurch gekennzeichnet, dass** alle verfügbaren Prozessoren instruiert werden, wenn die Dauer des Inhalts größer ist als eine vorherbestimmte Mindestdauer und dass anderenfalls eine reduzierte Teilmenge von Prozessoren instruiert wird.

13. Die Methode des Übertragens von Videodaten gemäß einem der Ansprüche 7 bis 12, **dadurch gekennzeichnet, dass** zuvor decodiertes Material zwischengespeichert wird.

14. Die Methode des Übertragens von Videodaten gemäß Anspruch 13, **dadurch gekennzeichnet, dass** zuvor decodiertes Material in einem Halbleiterspeicher zwischengespeichert wird, um einen schnellen Zugang zu dem besagten zwischengespeicherten Material zu ermöglichen.

15. Die Methode des Übertragens von Videodaten gemäß einem der Ansprüche 7 bis 14, **dadurch gekennzeichnet, dass** zeitbasierte Segmente von Audiomaterial in Kombination mit dessen zugehörigen Videomaterial bearbeitet werden.

## Revendications

1. Appareil de traitement vidéo (101) pour fournir des données vidéo d'une pluralité de sources accessibles (102, 103) à des dispositifs mobiles (102, 103) comprenant:
un dispositif d'entrée connecté à Internet (201) pour recevoir des ressources vidéo en provenance de serveurs accessibles par Internet ;
un dispositif de sortie connecté à un réseau mobile (202) pour envoyer des copies transcodées desdites ressources vidéo à des dispositifs mobiles ; et
un dispositif de transcodage (203) ayant une pluralité de processeurs de transcodage (401, 402) dans lequel :
le dispositif de transcodage est configuré pour :
fournir des données représentant une ressource vidéo à chacun desdits processeurs de transcodage ;
ordonner à chacun desdits processeurs de transcodage de transcoder un segment temporel de ladite ressource vidéo afin de produire des segments transcodés ; et
combiner lesdits segments transcodés afin de produire une copie transcodée ;
**caractérisé en ce que** :
lesdites données représentant une ressource vidéo qui sont fournies à chaque processeur de transcodage sont une copie de l'ensemble de ladite ressource vidéo.

2. Un appareil de traitement vidéo selon la revendication 1, **caractérisé en ce que** chaque dispositif de transcodage a accès à une pluralité de procédures de codage et de décodage vidéo.

3. Un appareil de traitement vidéo selon la revendication 1 ou la revendication 2, **caractérisé en ce que** chaque processeur de transcodage identifie le segment temporel faisant l'objet d'instructions et lit certains cadres avant et/ou après ledit segment défini afin d'effectuer un décodage complet.

4. Un appareil de traitement vidéo selon une quelconque des revendications 1 à 3, **caractérisé en ce que** le dispositif de transcodage fait usage de tous les processeurs de transcodage disponibles si les données vidéo ont une durée supérieure à une durée minimale prédéterminée, ou bien **en ce que** le dispositif de transcodage fait usage d'un sous-ensemble réduit de processeurs de transcodage.

5. Un appareil de traitement vidéo selon une quelconque des revendications 1 à 4, **caractérisé en ce que** le dispositif de transcodage inclut une mémoire cache pour mémoriser des ressources vidéo précédemment décodées.

6. Un appareil de traitement vidéo selon une quelconque des revendications 1 à 5, **caractérisé en ce que** ledit dispositif de transcodage ordonnant à chacun des processeurs de transcodage de transcoder des segments temporels de données audio associés à chaque segment temporel de données vidéo.

7. Une méthode pour fournir des données vidéo d'une pluralité de sources accessibles (102, 103) à des dispositifs mobiles (102, 103), comprenant les étapes consistant à :
recevoir une identification d'une ressource vidéo en provenance d'un dispositif mobile requérant ;
lire ladite ressource vidéo à partir d'une source externe ;
fournir des données représentant la ressource vidéo à chacun d'une pluralité de processeurs de transcodage ;
ordonner à chacun desdits processeurs de transcoder un segment temporel de la ressource ;
combiner les segments transcodés afin de produire une copie transcodée ; et
fournir ladite copie transcodée au dispositif mobile requérant ;
**caractérisée en ce que** :
lesdites données représentant la ressource vidéo qui sont fournies à chaque processeur de transcodage sont une copie de l'ensemble de ladite ressource vidéo.

8. La méthode selon la revendication 7, **caractérisée en ce que** lesdites sources accessibles sont fournies par des sites Web accessibles par Internet.

9. La méthode selon la revendication 7 ou la revendication 8, **caractérisée en ce que** :
une recherche est effectuée pour identifier les ressources vidéo ;
une liste est présentée à un utilisateur d'un dispositif mobile ; et
une identification est reçue en réponse au fait qu'un utilisateur effectue une sélection dans ladite liste.

10. La méthode pour fournir des données vidéo selon une quelconque des revendications 7 à 9, **caractérisée en ce que** chaque processeur de transcodage a accès à une pluralité de procédures de codage et de décodage.

11. La méthode pour fournir des données vidéo selon une quelconque des revendications 7 à 10, dans laquelle chaque processeur identifie un segment de la ressource vidéo faisant l'objet d'instructions et décode certains cadres avant et/ou après ledit segment défini afin de faciliter le décodage vidéo.

12. La méthode pour fournir des données vidéo selon une quelconque des revendications 7 à 11, **caractérisée en ce que** tous les processeurs disponibles font l'objet d'instructions si la durée de la ressource est supérieure à une durée minimale prédéterminée, ou bien **en ce qu'**un sous-ensemble réduit de processeurs font l'objet d'instructions.

13. La méthode pour fournir des données vidéo selon une quelconque des revendications 7 à 12, dans laquelle le matériel précédemment décodé est mis dans une mémoire cache.

14. La méthode pour fournir des données vidéo selon la revendication 13, dans laquelle ledit matériel précédemment décodé est mis dans une mémoire cache à semi-conducteurs à l'état solide afin de faciliter un accès rapide audit matériel mis dans cette mémoire cache.

15. La méthode pour fournir des données vidéo selon une quelconque des revendications 7 à 14, **caractérisée en ce que** les segments temporels de matériel audio sont traités en combinaison avec leur matériel vidéo respectif.
